# NEUE EUROPÄISCHE PATENTSCHRIFT

(11) **EP 3 066 035 B2**
(45) Veröffentlichungstag und Bekanntmachung des Hinweises auf die Entscheidung über den Einspruch: **27.04.2022**
(45) Hinweis auf die Patenterteilung: 30.01.2019
(21) Anmeldenummer: 14793587.8
(22) Anmeldetag: 06.11.2014
(51) Int. Cl.: B65G 21/06, G01G 21/23

(54) **WAAGE MIT EINEM KLAPPBAREN WAAGENTISCH**
SCALES WITH A FOLDABLE WEIGHING TABLE
BALANCE MUNIE D'UN PLATEAU DE PESAGE RABATTABLE

(30) Priorität: 08.11.2013 DE 102013222694
(43) Veröffentlichungstag der Anmeldung: 14.09.2016
(73) Patentinhaber: GEA Food Solutions Germany GmbH, 35216 Biedenkopf-Wallau (DE)
(72) Erfinder: GAHLER, Thomas, 87657 Görisried (DE)
(74) Vertreter: Kutzenberger Wolff & Partner
(86) Internationale Anmeldenummer: PCT/EP2014/073928
(87) Internationale Veröffentlichungsnummer: WO 2015/067693

(56) Entgegenhaltungen:
- EP-A1- 2 343 520
- DE-A1- 10 038 443
- DE-A1-102004 034 653
- DE-A1-102004 052 432
- FR-A1- 2 821 833
- US-A- 4 570 729
- US-A- 5 205 400
- US-A1- 2005 072 603
- US-B1- 6 509 533

## Beschreibung

Die vorliegende Erfindung betrifft eine Waage aufweisend ein Gestell, an dem mindesten ein, vorzugsweise mehrere Waagentische vorgesehen sind, die jeweils mit einem Rahmen versehen sind.

Derartige Waagen sind aus dem Stand der Technik, beispielsweise der DE 2 356 671, der US 2005/072603 A1, der US 4 570 729 A, der EP 2 343 520 A1 und der De 100 38 443 A1 hinlänglich bekannt. Auch ist es bekannt Waagen mit mehreren Waagentischen beispielsweise stromabwärts von mehrspurigen Aufschneidevorrichtungen vorzusehen, wobei dann jeder Spur der Aufschneidevorrichtung vorzugsweise ein Waagentisch zugeordnet ist. Diese Waagentische sind aber nur vergleichsweise schwierig zu reinigen, so dass dies selten und/oder unzureichend erfolgt.

Es war deshalb die Aufgabe der vorliegenden Erfindung eine Waage zur Verfügung zu stellen, die die Nachteile des Standes der Technik nicht aufweist.

Gelöst wird die Aufgabe mit einer Waage gemäß Patentanspruch 1.

Die vorliegende Erfindung betrifft eine Waage, insbesondere für Lebensmittelprodukte, insbesondere aufgeschnittene Lebensmittelprodukte, die vorzugsweise Protein enthalten. Insbesondere handelt es sich bei den Lebensmittelprodukten um Wurst Käse oder Schinken. Die Waage weist ein Gestell auf, an dem mehrere Waagentische angeordnet sind. Die Waagentische sind parallel zu-einander angeordnet. Vorzugsweise entspricht die An-zahl der Waagentische mindestens der Anzahl der Spu-ren, einer stromaufwärts vorgesehenen Lebensmittel-verarbeitungsvorrichtung, insbesondere einer Auf-schneidevorrichtung. Jeder Waagentisch kann unab-hängig von den anderen Waagentischen das Gewicht des Produkts, beispielsweise der Lebensmittelportion, die aus einer oder mehreren Lebensmittelscheiben be-steht, bestimmten. Die Gewichtsbestimmung erfolgt während sich das Produkt relativ zu dem je-weiligen Waagentisch bewegt. Jeder Waagentisch weist einen Rahmen auf. Erfindungsgemäß ist der Rahmen zumindest eines Waagentisches nun teilweise relativ zu dem Gestell klapp- und/oder drehbar vorgesehen, so dass der Rahmen von einer Gebrauchs- in eine Reinigungsstellung und umgekehrt überführbar ist. In der Gebrauchsstellung ist die Oberfläche des Waagentisches, auf dem sich das zu wiegende Produkt befindet vorzugsweise horizontal ausgerichtet und fluchtet besonders bevorzugt mit Transportmitteln, die sich stromaufwärts und/oder stromabwärts von dem Waagentisch befinden. Im Bereich jedes Waagentisches befindet sich vorzugsweise mindestens eine Messzelle, die direkt oder indirekt mit dem Waagentisch, insbesondere mit dem klapp- und/oder drehbaren Teil des Waagentisches zusammenwirkt und dadurch das Gewicht des Produktes, das sich auf dem Waagentisch befindet, bestimmt. In der Reinigungsstellung befindet sich der klapp- und/oder drehbare Teil des Rahmens dann in einer zur Horizontalen winkligen, vorzugsweise rechtwinkligen Stellung. In der Reinigungsstellung ist sowohl der Waagentisch als auch das Gestell der Waage sehr gut zugänglich und dadurch sehr einfach zu reinigen. Ein gegebenenfalls an dem Rahmen des Waagentisches vorgesehenes Endlosband kann in der Reinigungsstellung des Rahmens von diesem entfernt und gereinigt werden.

Vorzugsweise weist der Rahmen einen relativ zum Gestell der Waage feststehenden Abschnitt und einen relativ zu dem Gestell der Waage klapp- und/oder drehbaren Abschnitt auf. Die beiden Abschnitte sind vorzugsweise über ein Dreh- und/oder Klapplager miteinander verbunden, so dass der dreh- und/oder klappbare Abschnitt relativ zu dem feststehenden Abschnitt bewegt werden kann. Dieses Dreh- und/oder Klapplager kann mit dem Gestell der Waage verbunden sein. Beide Abschnitte weisen eine Länge auf, die jeweils deren Ausdehnung in Transportrichtung ist. Vorzugsweise weist der klappbare Abschnitt eine größere Länge als der feststehende Abschnitt auf.

Vorzugsweise ist zwischen zwei benachbarten Rahmen quer zur Transportrichtung der Transportbänder, insbesondere Endlosbänder, ein Abstand vorgesehen. Vorzugsweise sind die feststehenden Abschnitte zweier gegenüberliegender, insbesondere versetzter, Rahmen so vorgesehen, dass zwischen ihren einander zugewandten Enden ein durchgängiger Abstand vorgesehen ist. Ein oder mehrere Abstände können zur Reinigung der Vorrichtung und/oder Entnahme der Transportbänder dienen.

Vorzugsweise ist der Waagentisch so vorgesehen, dass er vollständig und/oder teilweise von dem Gestell der Waage reversibel entfernt werden kann.

Der Rahmen jedes Waagentisches ist mit einem oder mehreren Lager(n) an dem Ge- stell der Waage gelagert. Mindestens eines, vorzugswei-se jedes Lager kann dabei von dem Gestell lösbar vor-gesehen sein. Diese(s) Lager wirkt vorzugsweise mit ei-ner oder mehreren Meßzellen zusammen.

Die Lager benachbarter Waagentische sind versetzt zueinander angeordnet. Dies verbessert/vereinfacht beispielsweise ebenfalls die Reinigung der erfindungsgemäßen Waage.

Vorzugsweise ist die Klapp- und/oder Drehrichtung benachbarter Waagentische von der Gebrauchs- in die Reinigungsstellung und umgekehrt jeweils gegenläufig. Auch diese bevorzugte Ausführungsform der vorliegenden Erfindung verbessert/vereinfacht die Reinigung der erfindungsgemäßen Waage. Außerdem wird durch diese bevorzugte Ausführungsform der vorliegenden Erfindung Montage/Demontage eines gegebenenfalls an dem Rahmen angeordneten Transportmittels, insbesondere Transportbandes, vereinfacht.

Gemäß einer bevorzugten Ausführungsform der vorliegenden Erfindung ist an dem Rahmen ein Transportmittel, insbesondere ein Transportband, vorzugsweise ein Endlosband angeordnet. Diese Transportmittel ist vorzugsweise angetrieben und bewegt das zu wiegende Produkt entlang des Waagentisches. Während der Verweilzeit des Produktes auf dem Waagentisch wird das Gewicht des Produktes be-stimmt. Als bevorzugtes Transportmittel kommen auch Endlosriemen, von denen pro Waagentisch vorzugswei-se mehrere, parallel zueinander vorgesehen sind.

Vorzugsweise spannt der Rahmen das Transportmittel, insbesondere das Transportband, in seiner Gebrauchsstellung. In der Reinigungsstellung des Rahmens ist das Transportmittel vorzugsweise nicht gespannt und lässt sich dadurch leicht von dem Rahmen entfernen, um es beispielweise zu reparieren auszutauschen oder zu reinigen.

Vorzugsweise weist der Rahmen an zwei, bezogen auf die Laufrichtung des Transportmittels, gegenüberliegenden Seiten jeweils eine Rolle auf, um die das Transportmittel, insbesondere das Endlosband oder der/die Endlosriemen umlaufen. Eine der Rollen ist vorzugsweise angetrieben, wobei sich der Antriebsmotor vorzugsweise innerhalb des Gestells der Waage befindet.

Vorzugsweise ist der klapp- und/oder drehbare Abschnitt des Rahmens an dem feststehenden Abschnitt des Rahmens oder zu dem Gestell in seiner Gebrauchs- und/oder Reinigungsstellung arretierbar, insbesondere Werkzeuglos arretierbar.

Stromabwärts von der Waage ist vorzugsweise ein Einleger vorgesehen, der die gewogenen Produkte in eine Verpackung einlegt.

Das Signal der Waage wird vorzuweise zur Steuerung der Aufschneidevorrichtung verwendet.

Im Folgenden wird die Erfindung anhand der Figuren 1 - 3 erläutert. Diese Erläuterungen sind lediglich beispielhaft und schränken den allgemeinen Erfindungsgedanken nicht ein.
**Fig. 1** zeigt die erfindungsgemäße Waage mit den Waagentischen in der Gebrauchsposition.
**Fig. 2** zeigt eine Seitenansicht der erfindungsgemäßen Waage gemäß Figur 1.
**Fig. 3** zeigt die Waage gemäß den Figuren 1 und 2 mit den Waagentischen in der Reinigungsstellung.

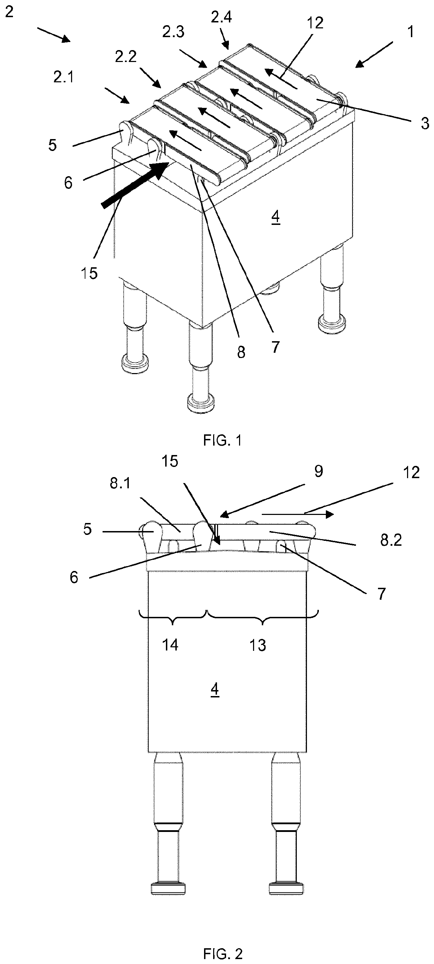

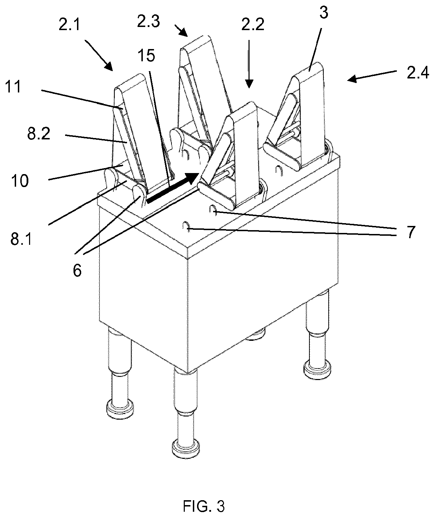

**Figur 1** zeigt die erfindungsgemäße Waage 1, die ein Gestell 4 aufweist, mit einem Rahmen, der von einer Verkleidung umgeben ist. Innerhalb des Gestells können sich Antriebe und/oder die Elektronik der Waage befinden. Des Weiteren weist die Waage in dem vorliegenden Fall vier Waagentische 2 auf, entlang derer das zu wiegende Produkt, hier aufgeschnittene Lebensmittel, wie durch den Pfeil 12 dargestellt, transportiert und dabei gewogen werden. Jeder Waagentisch kann völlig unabhängig von den anderen Waagentischen wiegen und das jeweils gewogene Gewicht kann unabhängig von den anderen Waagentischen ermittelt und zur Steuerung der stromaufwärtigen Aufschneidevorrichtung und/oder einer stromabwärtigen Produktausscheidung und/oder Produktkomplettierung herangezogen werden. Jeder Waagentisch 2.1 - 2.4 ist an dem Gestell mit mindestens einem, hier zwei Lagern 5, 6 gelagert. Vorzugsweise sind die Lager 5, 6 zweier benachbarter Waagentische versetzt zueinander, angeordnet. In dem vorliegenden Fall befindet sich das Lager 5, 6 eines Waagentisches 2.1, 2.3 an dem einen Ende des Gestells der Waage und das Lager 5,6 des jeweils benachbarten Waagentisches 2.2, 2.4 an dem gegenüberliegenden Ende des Waagentisches. Jeder Wagentisch 2 weist einen Rahmen 8 auf, der in dem vorliegenden Fall an zwei gegenüberliegenden Enden jeweils eine Rolle 10, 11 versehen ist, von denen hier die Rolle 10 angetrieben ist (vgl. Fig. 3.) Um die Rollen 10, 11 läuft ein Transportmittel 3, hierein Endlosband um, um das jeweils zu wiegende Produkt entlang des Waagentisches zu transportieren und dabei zu wiegen. Das Transportmittel 3 wird von der Rolle 10 drehend angetrieben. Um das jeweils auf dem Waagentisch befindliche Produkt zu wiegen, sind eine oder mehrere Messzellen vorgesehen Waagentisches die mit dem je-weiligen Waagentisch zusammenwirkt. Vorzugsweise ist die Messzelle nicht Teil des Rahmens. Vorzugsweise ist für den klappbaren Teil eines jeden Rahmens eine Auflage 7 vorgesehen.

**Figur 2** zeigt eine Seitenansicht der Waage 1 gemäß Figur 1. Es ist deutlich zu erkennen, dass der Rahmen 8 jedes Waagentisches aus einem relativ zu dem Gestell 4 feststehenden Abschnitt 8,1, der in dem vorliegenden Fall mittels der Lager 5, 6 an dem Gestell vorgesehen ist und einem klapp- bzw. drehbaren Abschnitt 8.2 besteht. Der Abschnitt 8.2 ist an dem Abschnitt 8.1 mittels der Klapp- und/oder Drehachse 9 an dem Abschnitt 8,1 und/oder an dem Gestell 4 gelagert ist. In dem vorliegenden Fall wirkt der klapp- und/oder drehbare Abschnitt 8.2 mit der Messzelle zusammen. Es ist deutlich zu erkennen, dass gemäß einer bevorzugten Ausführungsform die Länge 13 des klappbaren Abschnitts länger ist als die Länge 14 des feststehenden Abschnitts. Die Länge ist dabei jeweils die Ausdehnung des jeweiligen Abschnitts in Transportrichtung des Produkts. Vorzugsweise sind die Lager 5 und/oder 6 mit der Messzelle direkt oder indirekt verbunden.

Beide Figuren 1 und 2 zeigen die Waage 1 jeweils mit den Waagentischen in der Gebrauchsstellung, d.h. in der Position, in der auf jedem Waagentisch das Gewicht eines Produktes bestimmt werden kann.

**In** **Figur 3** ist die Waage 1 mit allen Waagentischen 2.1 - 2.4 in der Reinigungsstellung dargestellt. In diesem Fall sind die klapp- und/oder drehbaren Bereiche 8.2 von ihrer im Wesentlichen horizontalen Gebrauchsstellung um einen bestimmten Winkel, hier mindestens 90° um die Achse 9 relativ zu dem feststehenden Anschnitt 8.1 geschwenkt. Vorzugsweise beträgt der Winkel jedoch mehr als 90°, um sicherzustellen, dass der klappbare Bereich in dieser Stellung bleibt. Dadurch wird zum einen der Transportgurt 3 entspannt und kann von dem Rahmen 8 des jeweiligen Waagentisches entfernt werden. Die versetzt Lagerung 5, 6 der jeweiligen Waagentische hat den Vorteil, dass jeder Waagentisch 2.1 - 2.4 sowohl von seiner rechten als auch von seiner linken Seite leicht zugänglich ist, so dass die Rahmen 8 und das Gestell 4 gut gereinigt werden können und/oder das Transportband 3 leicht von dem Rahmen entfernt bzw. an diesem wieder befestigt werden kann, Der Darstellung gemäß Figur 3 kann auch entnommen werden, dass sich das Lager 5, 6 nur auf einer Seite des Rahmens 8 befindet. Der Transportgurt kann dann über die gegenüberliegende Seite entnommen bzw. montiert werden. Sobald die Reinigung abgeschlossen ist, werden die Abschnitte 8.2 jeweils wieder von der Reinigungs- in die Gebrauchsstellung überführt und die Waage 1 ist wieder einsatzbreit. Wie ebenfalls Figur 3 entnommen werden kann, ist zwischen den einander zugewandten Enden, insbesondere den Lagern 6 von zwei gegenüberliegenden Rahmen, ein durchgehender Abstand vorgesehen, der beispielsweise die Reinigung der Vorrichtung erleichtert. Auch quer Transportrichtung der Transportbänder ist vorzugsweise ein Abstand zwischen den feststehenden Abschnitten vorgesehen, um die Transportbänder leicht von dem Rahmen entfernen zu können.

### Bezugszeichen:

- 2: Waage, Mehrspurwaage Waagentisch
- 2.1 - 2.4: erster bis vierter Waagentisch
- 3: Transportband, Endlosband
- 4: Gestell
- 5: erstes Lager
- 6: zweites Lager
- 7: Auflage klappbarer Abschnitt
- 8: Rahmen des Waagentisches
- 8.1: feststehender Abschnitt
- 8.2: klappbarer Abschnitt
- 9: Klapp- und/oder Drehachse
- 10: angetriebene Rolle
- 11: freidrehende Rolle
- 12: Transportrichtung der zu wiegenden Produkte
- 13: Länge des klappbaren Abschnitts
- 14: Länge des feststehenden Abschnitts
- 15: Durchgang zwischen feststehenden Abschnitten 8.1

## Patentansprüche

1. Waage (1) aufweisend ein Gestell (4), an dem mehrere parallel zueinander angeordnete Waagentische (2) vorgesehen sind, die jeweils einen Rahmen (8) aufweisen, wobei eine Gewichtsbestimmung erfolgt während sich ein Produkt relativ zu dem jeweiligen Waagentisch in eine Transportrichtung (12) bewegt und wobei der Rahmen jedes Wagentisches zumindest teilweise relativ zu dem Gestell (4) klapp- und/oder drehbar vorgesehen ist, so dass der Rahmen von einer Gebrauchs- in eine Reinigungsstellung und umgekehrt überführbar ist und der Rahmen (8) jedes Waagentischs (2) mit einem Lager (5, 6) an dem Gestell gelagert ist, **dadurch gekennzeichnet, dass** die Lager (5, 6) benachbarter Waagentische (2) bezogen auf die Transportrichtung des Produkts versetzt zueinander angeordnet sind.

2. Waage (1) nach Anspruch 1, **dadurch gekennzeichnet, dass** der Rahmen (8) einen relativ zum Gestell (4) feststehenden Abschnitt (8.1) und einen klapp- und/oder drehbaren Abschnitt (8.2) aufweist.

3. Waage (1) nach einem der voranstehenden Ansprüche, **dadurch gekennzeichnet, dass** die Klapp- und/oder Drehrichtung benachbarter Waagentische von der Gebrauchs- in die Reinigungsstellung und umgekehrt jeweils gegenläufig ist..

4. Waage (1) nach einem der voranstehenden Ansprüche, **dadurch gekennzeichnet, dass** an dem Rahmen ein Transportmittel (3), insbesondere ein Endlosband, angeordnet ist.

5. Waage (1) nach Anspruch 4, **dadurch gekennzeichnet, dass** der Rahmen das Transportband (3) in seiner Gebrauchsstellung spannt und dass es in der Reinigungsstellung des Rahmens nicht gespannt ist.

6. Waage (1) nach Anspruch 5, **dadurch gekennzeichnet, dass** das Transportband (3) im nichtgespannten Zustand von dem Rahmen abnehmbar ist.

7. Waage (1) nach einem der voranstehenden Ansprüche, **dadurch gekennzeichnet, dass** das Transportband an zwei bezogen auf dessen Laufrichtung gegenüberliegenden Enden (3.1, 3,2) jeweils eine Rolle aufweist.

8. Waage nach einem der voranstehenden Ansprüche, **dadurch gekennzeichnet, dass** der Rahmen (8) teilweise abnehmbar vorgesehen ist.

## Claims

1. Set of scales (1) having a rack (4) on which a plurality of weighing tables (2) that are disposed so as to be mutually parallel and have in each case one frame (8) are provided, wherein a determination of the weight takes place while a product moves relative to the respective weighing table in a transport direction (12), and wherein the frame of each weighing table is provided so as to be at least partially pivotable and/or rotatable in relation to the rack (4), such that the frame is convertible from a use position to a cleaning position and vice-versa, and the frame (8) of each weighing table (2) is mounted on the rack by way of a mounting (5, 6), **characterized in that** the mountings (5, 6) of adjacent weighing tables (2) are disposed so as to be mutually offset in relation to the transport direction of the product.

2. Set of scales (1) according to Claim 1, **characterized in that** the frame (8) in relation to the rack (4) has a fixed portion (8.1) and a pivotable and/or rotatable portion (8.2).

3. Set of scales (1) according to one of the preceding claims, **characterized in that** the pivoting and/or rotating directions of adjacent weighing tables from the use position to the cleaning position and vice-versa are in each case opposed.

4. Set of scales (1) according to one of the preceding claims, **characterized in that** a conveying means (3), in particular an endless belt, is disposed on the frame.

5. Set of scales (1) according to Claim 4, **characterized in that** the frame in the use position thereof tensions the conveyor belt (3), and that said conveyor belt (3) in the cleaning position of the frame is not tensioned.

6. Set of scales (1) according to Claim 5, **characterized in that** the conveyor belt (3) in the nontensioned state is removable from the frame.

7. Set of scales (1) according to one of the preceding claims, **characterized in that** the conveyor belt at two ends (3.1, 3.2) which in relation to the running direction of the former are mutually opposite has in each case one roller.

8. Set of scales according to one of the preceding claims, **characterized in that** the frame (8) is provided so as to be partially removable.

## Revendications

1. Balance (1) présentant un bâti (4) sur lequel sont prévus plusieurs plateaux de pesage (2) qui sont disposés parallèlement les uns par rapport aux autres et qui présentent chacun un cadre (8), une détermination de poids étant effectuée pendant qu'un produit se déplace dans un sens de transport (12) par rapport au plateau de pesage respectif, le cadre de chaque plateau de pesage étant prévu de manière à pouvoir être rabattu et/ou tourné au moins en partie par rapport au bâti (4) de telle sorte que le cadre puisse être transféré d'une position d'utilisation dans une position de nettoyage et inversement et le cadre (8) de chaque plateau de pesage (2) étant supporté sur le bâti avec un palier (5, 6), **caractérisée en ce que** les paliers (5, 6) de plateaux de pesage adjacents (2) sont disposés de manière décalée les uns des autres par rapport au sens de transport.

2. Balance (1) selon la revendication 1, **caractérisée en ce que** le cadre (8) présente une portion (8.1) fixe par rapport au bâti (4) et une portion (8.2) pouvant être rabattue et/ou tournée.

3. Balance (1) selon l'une quelconque des revendications précédentes, **caractérisé en ce que** les sens de rabattement et/ou de rotation de plateaux de pesage adjacents de la position d'utilisation dans la position de nettoyage et inversement sont à chaque fois inversés.

4. Balance (1) selon l'une quelconque des revendications précédentes, **caractérisée en ce qu'**un moyen de transport (3), en particulier une bande sans fin, est disposé(e) sur le cadre.

5. Balance (1) selon la revendication 4, **caractérisée en ce que** le cadre tend la bande de transport (3) dans sa position d'utilisation et **en ce qu'**elle n'est pas tendue dans la position de nettoyage du cadre.

6. Balance (1) selon la revendication 5, **caractérisée en ce que** la bande de transport (3) peut être enlevée du cadre dans l'état non tendu.

7. Balance (1) selon l'une quelconque des revendications précédentes, **caractérisée en ce que** la bande de transport présente à chaque fois un rouleau au niveau de deux extrémités (3.1, 3.2) opposées par rapport à son sens d'avance.

8. Balance selon l'une quelconque des revendications précédentes, **caractérisée en ce que** le cadre (8) est prévu de manière à pouvoir être en partie enlevé.
